# EUROPÄISCHE PATENTSCHRIFT

(11) **EP 1 182 345 B1**
(45) Veröffentlichungstag und Bekanntmachung des Hinweises auf die Patenterteilung: **03.01.2007**
(21) Anmeldenummer: 00116657.8
(22) Anmeldetag: 02.08.2000
(51) Int. Cl.: F02M 37/00

(54) **Kraftfahrzeugrohrleitung**
Vehicle fuel supply line
Conduite de carburant pour un véhicule automobile

(43) Veröffentlichungstag der Anmeldung: 27.02.2002
(73) Patentinhaber: TI Automotive (Fuldabrück) GmbH, 34277 Fuldabrück (DE)
(72) Erfinder: Zimmer, Werner, Dipl.-Ing., 34212 Melsungen (DE); Apel, Kurt, Dipl.-Ing., 36286 Neuenstein (DE); Otto, Torsten, Dipl.-Phys. Dr., 34292 Ahnatal (DE)
(74) Vertreter: Rohmann, Michael

(56) Entgegenhaltungen:
- EP-A- 0 470 606
- EP-A- 1 002 977
- DE-C- 4 001 125
- US-A- 6 090 459

## Beschreibung

Die Erfindung betrifft eine durch Koextrusion hergestellte Kraftfahrzeugrohrleitung für Kraftstoffe u. dgl., mit einer Außenschicht aus Polyamid 12, einer Zwischenschicht und aus einer Innenschicht aus Polyamid 12.

Aus US-A 6 0 90 459 ist ein durch Koextrusion hergestelltes Mehrschichtrohr bekannt, das als Kraftfahrzeugrohrleitung eingesetzt wird. Die Innenschicht dieses Rohres kann aus Polyamid bestehen und im Übrigen kann die Innenschicht durch einen Zusatz von Graphitfibrillen dauerantistatisch ausgerüstet werden. Die Außenschicht dieser bekannten Kraftfahrzeugrohrleitung kann aus verschiedenen Kunststoffen bestehen, unter anderem aus Polyamid. Gegebenenfalls kann eine Sperrschicht für Kraftstoffkomponenten vorgesehen werden.

Aus DE 40 01 125 C1 ist eine Kraftfahrzeugrohrleitung bekannt, bei der eine Zwischenschicht aus einem Ethylen-Vinylalkohol-Copolymerisat als Kohlenwasserstoffpermeationsbarriereschicht funktioniert. Die Rohrinnenseite kann sich durch das vorbeiströmende Fluid in unzulässigem Maße elektrostatisch aufladen. Außerdem ist die Innenschicht nicht ZnCl-beständig, so dass keine Zn-haltigen Anschlussarmaturen eingesetzt werden können, da hierdurch eine Rohrschädigung zufolge beschleunigter Alterungseffekte, wie z. B. Spannungskorrosion, auftreten kann.

Bekannt ist es zwar auch (Römpp Chemie Lexikon, Bd. 2, Georg Thieme Verlag Stuttgart, 9. Auflage 1990, Seiten 1110 bis 1113), im nativen festen Zustand nicht leitfähige Polymere durch Zumischung leitfähiger Füllstoffe, wie z.B. Ruß oder Kohlenstofffasern, elektrisch leitfähig zu machen. Solche elektrisch leitende Polymere sind jedoch regelmäßig zu spröde und zu wenig duktil für den vorgenannten Einsatzzweck.

Der Erfindung liegt die Aufgabe zugrunde, eine Kraftfahrzeugrohrleitung der eingangs genannten Art anzugeben, die eine elektrisch leitfähige Innenschicht aufweist, die in einem Verbund mit weiteren Schichten steht, welcher Verbund sowohl eine hervorragende chemische Beständigkeit und eine Barrierewirkung als auch eine hervorragende mechanische Resistenz aufweist.

Zur Lösung dieses technischen Problems lehrt die Erfindung eine durch Koextrusion hergestellte Kraftfahrzeugrohrleitung für Kraftstoffe und dergleichen, mit einer Außenschicht aus Polyamid 12, einer Zwischenschicht aus einem Ethylen-Vinylalkohol-Copolymerisat und einer Innenschicht aus Polyamid 12, das durch einen Zusatz von höchstens 30 Gew.% Leitruß oder Graphitfibrillen elektrisch leitfähig gemacht ist,
wobei zwischen der Außenschicht und der Zwischenschicht sowie zwischen der Zwischenschicht und der Innenschicht jeweils eine Haftvermittlerschicht aus einem funktionale Gruppen aufweisenden Polyolefin angeordnet ist,
wobei eine Wandstärke von 30 bis 60 % der Gesamtwandstärke im außerhalb der Zwischenschicht liegenden Bereich vorgesehen ist, wobei die Zwischenschicht eine Wandstärke von 5 bis 25 % der Gesamtwandstärke aufweist und wobei eine Wandstärke von 25 bis 55 % der Gesamtwandstärke im innerhalb der Zwischenschicht liegenden Bereich vorgesehen ist.

Die Erfindung geht von der Erkenntnis aus, dass Polyamid 12 durch den Zusatz von höchstens 30 Gew.% Leitruß oder Graphitfibrillen für den gegebenen Einsatzzweck hinreichend elektrisch leitfähig und bis zu einem gewissen Grade zugleich ZnCl-beständig gemacht werden kann, ohne dass bezüglich der Duktilität Abstriche gemacht werden müssen. Werden hohe Anforderungen an die ZnCl-Beständigkeit gestellt, empfiehlt es sich weitere entsprechende Zusätze beizugeben.

Nach einer Ausführungsform ist der Außenschicht und der Zwischenschicht aus Ethylen-Vinylalkohol-Copolymerisat und/oder der Zwischenschicht aus Ethylen-Vinylalkohol-Copolymerisat und der Innenschicht jeweils eine Zusatzschicht aus einem Polyamid 6, einem durch Zusatz von höchstens 30 Gew.% Leitruß oder Graphitfibrillen elektrisch leitfähig und ZnCl-beständig gemachten Polyamid 6 oder einem Polyamid 6-Compound zwischengeschaltet. Im Übrigen empfiehlt es sich immer dann, wenn Polymere, die schlechte Haftungseigenschaften untereinander aufweisen, die Anordnung so zu treffen, dass zwischen der Außenschicht und der benachbarten Zwischen- oder Zusatzschicht und/oder der Innenschicht und der benachbarten Zwischen- oder Zusatzsschicht jeweils eine Haftvermittlerschicht angeordnet ist. Erfindungsgemäß besteht eine Haftvermittlerschicht aus einem funktionale Gruppen aufweisenden Polyolefin, insbesondere auf Basis Polyethylen oder Polypropylen. Der Innenschicht aus Polyamid 12 und der nach außen hin folgenden Haftvermittlerschicht kann noch eine Zusatzschicht aus nicht leitfähigem Polyamid 12 zwischengeschaltet sein.

Die Gesamtwandstärke der Kraftfahrzeugrohrleitung sollte zwischen 0,8 bis 2,0 mm ausmachen. Erfindungsgemäß ist die Kraftfahrzeugrohrleitung gekennzeichnet durch eine Wandstärke von 30 bis 60 % der Gesamtwandstärke im außerhalb der Zwischenschicht liegenden Bereich, eine Wandstärke der Zwischenschicht von 5 bis 25 % der Gesamtwandstärke und eine Wandstärke von 25 bis 55 % der Gesamtwandstärke im innerhalb der Zwischenschicht liegenden Bereich.

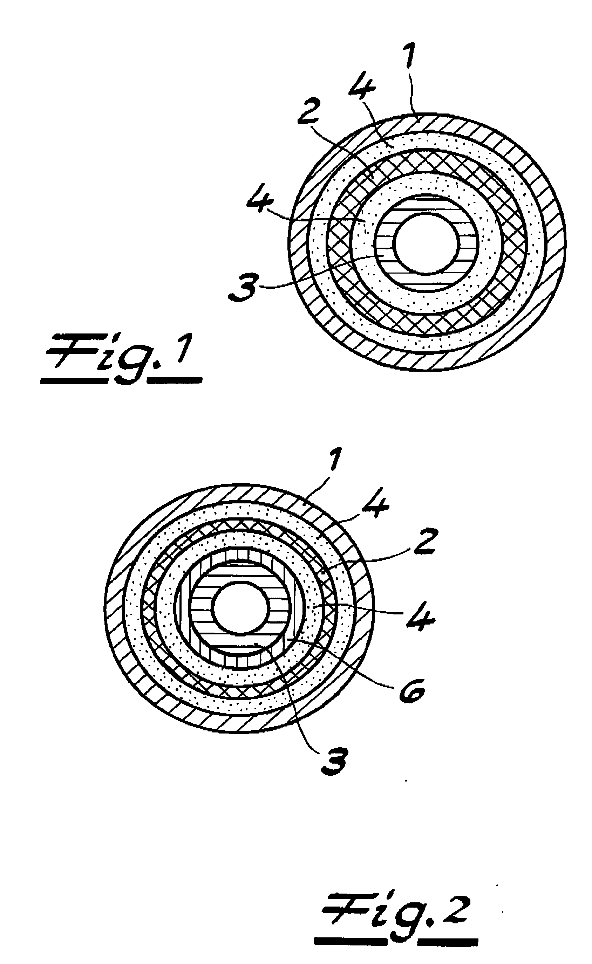

Im Folgenden wird die Erfindung anhand einer Zeichnung erläutert, deren Fig. 1 und 2 in einem schematischen Querschnitt zwei Beispiele für eine erfindungsgemäße, durch Koextrusion hergestellte Kraftfahrzeugrohrleitung für Kraftstoffe u. dgl. zeigen.

In beiden Fällen weist die Kraftfahrzeugrohrleitung eine Außenschicht 1 aus Polyamid 12 (PA 12), eine Zwischenschicht 2 aus Ethylen-Vinylalkohol-Copolymerisat (EVAL) als Kohlenwasserstoffpermeationsbarriereschicht und eine Innenschicht 3 aus Polyamid 12 auf, das durch einen Zusatz von höchstens 30 Gew.% Leitruß oder Graphitfibrillen elektrisch leitfähig und ZnCl-beständig gemacht ist.

Bei der Ausführungsform nach Fig. 1 schließlich sind der Außenschicht 1 und der Zwischenschicht 2 sowie der Zwischenschicht 2 und der Innenschicht 3 jeweils eine Haftvermittlerschicht 4 zwischengeschaltet. Der Aufbau der Kraftfahrzeugrohrleitung nach Fig. 2 unterscheidet sich von dem nach Fig. 1 nur dadurch, dass der Innenschicht 3 und der nach außen hin folgenden Haftvermittlerschicht eine Zusatzschicht 6 aus nicht leitfähigem Polyamid 12 zwischengeschaltet ist.

Die Wandstärken der einzelnen Schichten ergeben sich aus der nachfolgenden Aufstellung:

| Fig. 1 | | Fig. 2 | |
|---|---|---|---|
| 0,40 mm | PA 12 | 0,35 mm | PA 12 |
| 0,05mm | HV | 0,05 mm | HV |
| | | | |
| 0.15 mm | EVAL | 0,15 mm | EVAL |
| 0.30 mm | HV | 0,05mm | HV |
| | | 0,30 mm | PA 12 |
| 0.10 mm | PA 12* | 0.10 mm | PA 12* |

## Patentansprüche

1. Durch Koextrusion hergestellte Kraftfahrzeugrohrleitung für Kraftstoffe und dergleichen, mit einer Außenschicht (1) aus Polyamid 12, einer Zwischenschicht (2) aus einem Ethylen-Vinylalkohol-Copolymerisat und einer Innenschicht (3) aus Polyamid 12, das durch einen Zusatz von höchstens 30 Gew.-% Leitruß oder Graphitfibrillen elektrisch leitfähig gemacht ist,
wobei zwischen der Außenschicht (1) und der Zwischenschicht (2) sowie zwischen der Zwischenschicht (2) und der Innenschicht (3) jeweils eine Haftvermittlerschicht (4) aus einem funktionale Gruppen aufweisenden Polyolefin angeordnet ist,
wobei eine Wandstärke von 30 bis 60 % der Gesamtwandstärke im außerhalb der Zwischenschicht (2) liegenden Bereich vorgesehen ist, wobei die Zwischenschicht (2) eine Wandstärke von 5 bis 25 % der Gesamtwandstärke aufweist und wobei eine Wandstärke von 25 bis 55 % der Gesamtwandstärke im innerhalb der Zwischenschicht (2) liegenden Bereich vorgesehen ist.

2. Kraftfahrzeugrohrleitung nach Anspruch 1, wobei der Innenschicht (3) und der nach außen hin folgenden Haitvermittlerschicht (4) eine Zusatzschicht (6) aus nicht leitfähigem Polyamid 12 zwischengeschaltet ist.

3. Kraftfahrzeugrohrleitung nach einem der Ansprüche 1 oder 2, wobei das Polyolefin als Basismaterial Polyethylen oder Polypropylen enthält.

4. Kraftfahrzeugrohrleitung nach einem der Ansprüche 1 bis 3, wobei eine Gesamtwandstärke von 0,8 bis 2,0 mm vorgesehen ist.

## Claims

1. Motor vehicle line for fuels and the like, which is produced by coextrusion, comprising an outer layer (1) made of polyamide 12, an intermediate layer (2) made of an ethylene/vinyl alcohol copolymer, and an inner layer (3) made of polyamide 12, which is rendered electrically conductive by adding at most 30% by weight of conductive carbon black or graphite fibrils,
wherein in each case an adhesion-promoting layer (4) made of a polyolefin containing functional groups is arranged between the outer layer (1) and the intermediate layer (2) and between the intermediate layer (2) and the inner layer (3),
wherein a wall thickness of 30 to 60% of the total wall thickness is provided in the region located outside the intermediate layer (2), wherein the intermediate layer (2) has a wall thickness of 5 to 25% of the total wall thickness, and
wherein a wall thickness of 25 to 55% of the total wall thickness is provided in the region located inside the intermediate layer (2).

2. Motor vehicle line according to Claim 1, wherein an additional layer (6) made of non-conductive polyamide 12 is interposed between the inner layer (3) and the adhesion-promoting layer (4) which adjoins it towards the outside.

3. Motor vehicle line according to one of Claims 1 or 2, wherein the polyolefin contains polyethylene or polypropylene as base material.

4. Motor vehicle line according to one of Claims 1 to 3, wherein a total wall thickness of 0.8 to 2.0 mm is provided.

## Revendications

1. Conduite de véhicule automobile pour carburants et autres fabriquée par coextrusion comprenant une couche extérieure (1) en polyamide 12, une couche intermédiaire (2) en un copolymère d'éthylène - alcool vinylique et une couche intérieure (3) en polyamide 12, qui est rendue électriquement conducteur par ajout d'au maximum 30% en poids de suie conductrice ou de fibrilles de graphite,
une couche d'agent adhésif (4) en une polyoléfine présentant des groupes fonctionnels étant disposée entre le couche extérieure (1) et la couche intermédiaire (2) ainsi qu'entre la couche intermédiaire (2) et la couche intérieure (3),
une épaisseur de paroi de 30 à 60% de l'épaisseur de paroi totale étant prévue dans la zone située à l'extérieur de la couche intermédiaire (2), la couche intermédiaire (2) présentant une épaisseur de paroi de 5 à 25% de l'épaisseur de paroi totale, et une épaisseur de paroi de 25 à 55% de l'épaisseur totale de paroi étant prévue dans la zone située à l'intérieur de la couche intermédiaire (2).

2. Conduite de véhicule automobile suivant la revendication 1, dans laquelle une couche supplémentaire (6) en polyamide non conducteur 12 est intercalée entre la couche intérieure (3) et la couche d'agent adhésif (4) suivante en direction de l'extérieur.

3. Conduite de véhicule automobile suivant l'une des revendications 1 ou 2, dans laquelle la polyoléfine renferme en tant que matériau de base du polyéthylène ou du polypropylène.

4. Conduite de véhicule automobile selon l'une quelconque des revendications 1 à 3, dans laquelle il est prévu une épaisseur de paroi totale de 0,8 à 2,0 mm.
